# EUROPÄISCHE PATENTSCHRIFT

(11) **EP 0 899 436 B1**
(45) Veröffentlichungstag und Bekanntmachung des Hinweises auf die Patenterteilung: **29.01.2003**
(21) Anmeldenummer: 97810616.9
(22) Anmeldetag: 29.08.1997
(51) Int. Cl.: F02B 33/42, F01N 3/20

(54) **Verbrennungsmaschine mit Druckwellenmaschine**
Internal combustion engine having pressure wave exchanger
Moteur à combustion interne comprenant un échangeur d'ondes de pression

(43) Veröffentlichungstag der Anmeldung: 03.03.1999
(73) Patentinhaber: Swissauto Engineering S.A., 1037 Etagnières (CH)
(72) Erfinder: Wenger, Urs, 4900 Langenthal (CH); Martin, Roger, 5504 Othmarsingen (CH)
(74) Vertreter: AMMANN PATENTANWAELTE AG BERN

(56) Entgegenhaltungen:
- WO-A-97/33080
- US-A- 4 553 387
- PATENT ABSTRACTS OF JAPAN vol. 016, no. 299 (M-1274), 2.Juli 1992 & JP 04 081510 A (MAZDA MOTOR CORP), 16.März 1992,

## Beschreibung

Die vorliegende Erfindung bezieht sich auf einen Ottomotor mit Druckwellenmaschine und einem Katalysator gemäss Patentanspruch 1 sowie auf einen Diesel-Motor mit Druckwellenlader und einer Heizeinrichtung und einem Katalysator gemäss Patentanspruch 8.

Ein Otto-Motor mit Druckwellenmaschine ist in der nicht vorveröffentlichten WO 97 33080 A des gleichen Anmelders beschrieben, wobei diese Veröffentlichung den nächsten Stand der Technik für die Erfindung gemäss dem unabhängigen Anspruch 1 darstellt. Dabei ist ausser der Kombination Otto-Motor mit einer Druckwellenmaschine, einem geregelten Dreiwegkatalysator und einem Oxydationskatalysator eine Heizeinrichtung beschrieben, die zwischen dem Motor-Auslass und dem Dreiwegkatalysator angeordnet ist.

Weitere Versuche haben ergeben, dass zwar damit die Kaltstart-Eigenschaften des Katalysators verbessert werden können, aber diejenigen der Druckwellenmaschine nicht wunschgemäss verbessert werden.

Es ist von diesem Stand der Technik ausgehend eine erste Aufgabe der vorliegenden Erfindung, insbesondere die Kaltstart-Eigenschaften der Druckwellenmaschine an einem Ottomotor mit Katalysator zu verbessern. Diese Aufgabe wird mit den Merkmalen von Patentanspruch 1 gelöst.

Ausserdem besteht der Wunsch, nicht nur die Eigenschaften eines Otto-Motors mit Druckwellenmaschine zu verbessern, sondern auch diejenigen eines Diesel-Motors mit Druckwellenlader. In der WO 97 20134 A ist eine nicht näher offenbarte Verbrennungskraftmaschine mit einer Druckwellenmaschine offenbart, wobei die erhitzte Luft einer Heizeinrichtung in die Abgasleitung zum Zellrotor der Druckwellenmaschine eingeleitet wird, um bessere Kaltstarteigenschaften zu erhalten und am Auspufftopf ein nicht näher bezeichneter Katalysator angeordnet ist.

Davon ausgehend ist es eine weitere Aufgabe der Erfindung, einen Diesel-Motor mit Druckwellenmaschine und dazwischen geschalteter Heizeinrichtung sowie Katalysator dahingehend zu verbessern, dass der Diesel-Motor sowohl eine Druckwellenmaschine als auch einen Katalysator mit besseren Kaltstarteigenschaften und eine wirksamere Abgasreinigung aufweist. Diese Aufgabe wird mit den Merkmalen von Patentanspruch 8 gelöst.

Weitere Merkmale und Vorteile sind in den abhängigen Ansprüchen definiert.

Die Erfindung wird im folgenden anhand einer Zeichnung eines Ausführungsbeispiels näher erläutert.
- Figur 1: zeigt schematisch eine erfindungsgemässe Kombination eines Otto-Motors mit Druckwellenmaschine, effizienter Abgasreinigung und Heizeinrichtung,
- Figur 2: zeigt eine Variante zur Kombination von Figur 1, und
- Figur 3: zeigt schematisch eine Kombination eines Diesel-Motors mit Druckwellenmaschine, effizienter Abgasreinigung und Heizeinrichtung.

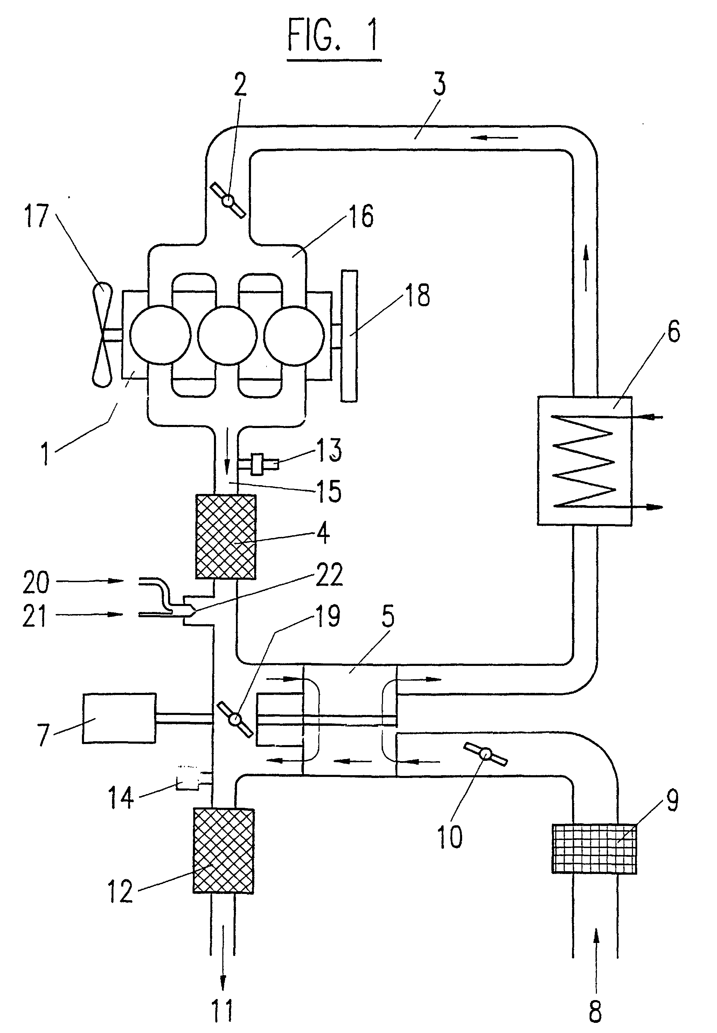

In Figur 1 erkennt man den Otto-Motor 1, eine Verbrennungsmaschine, eine Drosselklappe 2 im Ansaugkanal 3 und einen Dreiwegkatalysator 4 im Auslass 15. Der Motor, der irgend eine bekannte Verbrennungsmaschine wie Automobiloder Flugmotor sein kann und mit dem Saugrohr 16, dem Ventilator 17 und dem Abtrieb 18 gezeichnet ist, sowie der Dreiwegkatalysator 4, bilden einen herkömmlichen Otto-Motor, wie er als Stand der Technik bekannt ist.

Zu diesem herkömmlichen Otto-Motor ist eine Druckwellenmaschine 5 beigegeben, die mit einem Ladeluftkühler 6 im Ansaugkanal betrieben wird und gegebenenfalls einen Antrieb 7 aufweist, der elektrisch oder mechanisch sein kann oder aber bei geeigneter Formgebung und Dimensionierung der Druckwellenmaschine auch entfallen kann. Im Lufteinlass 8 befindet sich ein Luftfilter 9 und - in Abweichung zu den bekannten Druckwellenmaschinensysteme - eine Lader-Drosselklappe 10. Im Rohr 11 zur nicht eingezeichneten Abgasanlage ist als zweiter Katalysator ein Oxydationskatalysator 12 angeordnet. Zur Steuerung der Katalysatoren dienen die Lambda-Sonde 13, der Temperaturfühler 14 sowie die sogenannte Wastegate-Klappe 19.

Die Pfeile in den Kanälen weisen auf den Verlauf der Luftund Gasströme hin, und man entnimmt diesem Schema, dass die Frischluft beim Lufteintritt 8 angesogen wird und über das Luftfilter 9 und die Lader-Drosselklappe 10 in die Druckwellenmaschine 5 gelangt. Dort wird der grösste Teil der Frischluft durch die Aktion der Abgase verdichtet und über den Ladeluftkühler 6 und die Drosselklappe 2 dem Motor 1 zugeführt. Ein kleiner Teil der Frischluft gelangt, in Form von Spülluft, durch die Druckwellenmaschine 5 und vermischt sich dort mit den Abgasen. Die Abgase kommen von der Verbrennungsmaschine 1 über den Dreiwegkatalysator 4 zur Druckwellenmaschine 5 und gelangen anschliessend, mit Frischluft durchsetzt, über den Oxydationskatalysator 12 zur Abgasanlage.

Die Wastegate-Klappe 19 kann bei zu hohem Ladedruck geöffnet werden, so dass ein Teil der Abgase an der Druckwellenmaschine 5 vorbeigeleitet wird, wodurch ein kleineres Druckverhältnis erzeugt wird. So erzielt man einen besseren Gesamtwirkungsgrad für die Antriebseinheit und reduziert somit den Treibstoffverbrauch. Anstatt einer Wastegate-Klappe können auch andere, an sich bekannte Mittel zur Steuerung des Ladedruckes verwendet werden.

Die Lader-Drosselklappe 10 dient zur Steuerung der Spülluft. Mit ihr kann der Anteil an Frischluft, der in die Abgasanlage gelangt, reduziert werden. Dadurch wird die Abgastemperatur beim Oxydationskatalysator 12 erhöht, damit dieser schneller seine Anspringtemperatur erreicht und somit einen höheren Konvertierungsgrad erzielt. Das Signal des Temperaturfühlers 14 kann als Grösse für die Steuerung der Lader-Drosselklappe verwendet werden. Als weitere Steuergrössen können u. a. auch die Drehzahl des Motors sowie der Druck nach der Drosselklappe 2 dienen. Die Lambda-Sonde 13 liefert die Regelgrösse für die Gemischbildung.

Der Motor wird mit einem Lambdaverhältnis von 1 oder mit leichtem Treibstoffüberschuss betrieben. Bekanntermassen stellt der Dreiwegkatalysator in Verbindung mit der elektronisch geregelten Gemischaufbereitung (Lambda-Sonde) das derzeit wirksamste katalytische Abgasreinigungssystem dar. Dabei ist eine simultane Konversion aller drei Schadstoffkomponenten möglich, wobei ein möglichst exaktes stöchiometrisches Kraftstoff-Luft-Gemisch (Lambda 1) erforderlich ist. Bei diesen drei Komponenten handelt es sich um HC, CO und NOₓ. Durch eine Verschiebung des Regelbereichs Lambda 1 zur fetteren Seite können jedoch die NOₓ sehr effizient konvertiert und entfernt werden. Dies würde jedoch zu einer Verminderung der Konvertierungsrate der übrigen zwei Komponenten führen und wäre daher nicht sinnvoll, falls nur ein Dreiwegkatalysator verwendet wird.

Durch die Verwendung einer Druckwellenmaschine wird der Wirkungsgrad der Verbrennungsmaschine gesteigert und ermöglicht auch dadurch, dass durch die Druckwellenmaschine in der Abgasanlage ein Luftüberschuss erzeugt wird, dort die Verwendung eines Oxydationskatalysators, wodurch die verbleibenden Schadstoffe, die zum grössten Teil aus HC und CO bestehen, optimal konvertiert werden können. Je nach Katalysatorbeschichtung kann auch im Oxydationskatalysator noch eine wesentliche NOₓ-Konvertierungsrate erreicht werden.

Falls die Abgastemperatur am Auslass 15 gering ist, z.B. beim Kaltstart, wird die Konvertierungsrate am Dreiwegkatalysator kleiner, woraus sich hohe Abgasemissionen ergeben.

Ferner wird der Druckwellenprozess in der Druckwellenmaschine immer problematischer, je tiefer die Abgastemperaturen sind, wobei dieser Prozess im Extremfall ganz zum Erliegen kommen kann. Daher kann zu Beginn bei kaltem Motor nur ein reduzierter Ladedruck erreicht werden, was zu einer geringen Motorleistung führt.

Diesen beiden Problemen kann dadurch entgegengewirkt werden, dass zwischen dem Dreiwegkatalysator 4 und dem Abgaseinlass der Druckwellenmaschine ein Brenner 22 angeordnet wird, der bei tiefer Abgastemperatur eingeschaltet wird. Dadurch wird einerseits der Katalysator schneller auf seine optimale Betriebstemperatur gebracht und andererseits gelangen die Gase mit höherer Temperatur zur Druckwellenmaschine. Dadurch kommt der Druckwellen-Prozess bereits bei kaltem Motor in Gang und die ganze Motorleistung steht zur Verfügung. In Fig. 1 sind ausserdem die Luftzufuhr 20 und die Brennstoffzufuhr 21 für den Brenner 22 erkennbar.

Anstatt eines beschriebenen Brenners 22 können auch andere Heizeinrichtungen, z.B. eine elektrisch betriebene Heizung, verwendet werden. Wichtig ist dabei, sowohl die Funktion des Katalysators als auch des Laders günstig zu beeinflussen.

Die Verwendung einer Druckwellenmaschine mit einem Otto-Motor ermöglicht somit eine grosse Leistungssteigerung und vor allem auch den Einsatz eines nachgeschalteten Oxydationskatalysators, wodurch der Dreiwegkatalysator die eine Schadstoffkomponente, das NOₓ, effizienter beseitigen kann als bei einem herkömmlich verwendeten Dreiwegkatalysator, und andererseits die verbleibenden Schadstoffe, HC und CO, durch den Luftüberschuss im Oxydationskatalysator mit besonders grosser Konvertierungsrate entfernt werden können.

Aus dieser Kombination resultiert eine erhebliche Reduzierung der Schadstoffe im Vergleich zu herkömmlichen Otto-Motoren. Es ist selbstverständlich, dass im Vergleich zu einem konventionellen Otto-Motor durch die Verwendung einer Druckwellenmaschine bei gleicher Leistung beispielsweise ein kleinerer Motor mit geringerem Treibstoffverbrauch oder ein Motor mit insgesamt kleinerem Gewicht verwendet werden kann und dies bei erheblich kleinerem Schadstoffausstoss und dass durch die Anordnung der Heizeinrichtung wesentlich bessere Kaltstarteigenschaften erzielt werden können, die die Verwendung von Gastaschen bei der Druckwellenmaschine überflüssig machen kann.

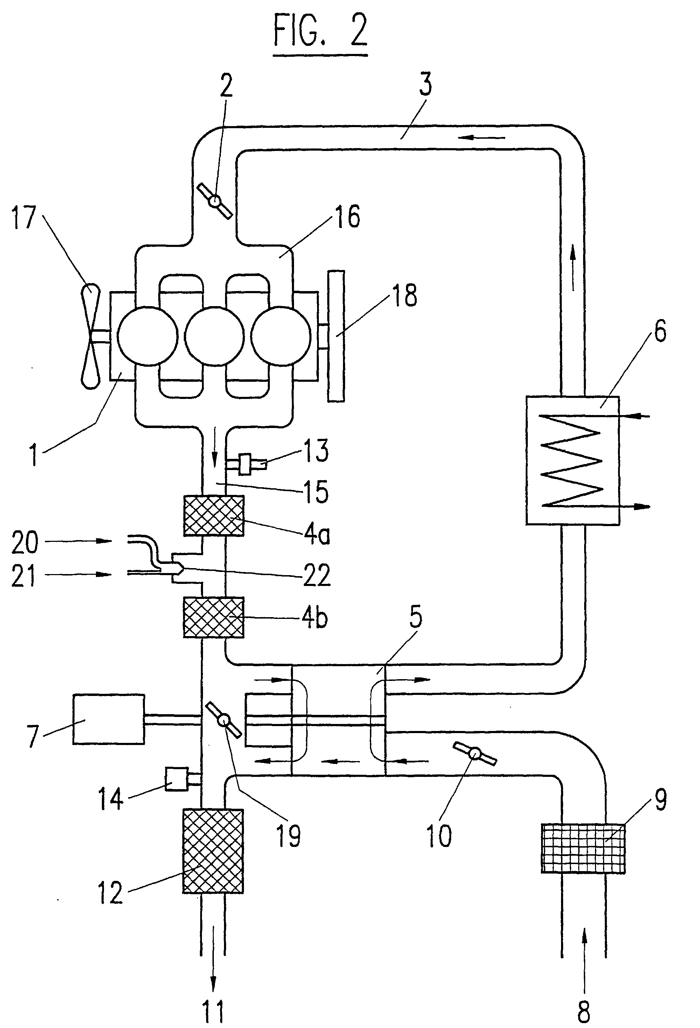

In Figur 2 ist eine Ausführungsvariante eingezeichnet, bei der der Dreiwegkatalysator in zwei Teile 4A und 4B geteilt worden ist und sich die Heizeinrichtung zwischen den beiden Katalysator-Teilen befindet. Dadurch kann eine effiziente Heizung des Katalysators und des Eingangs der Druckwellenmaschine erzielt werden.

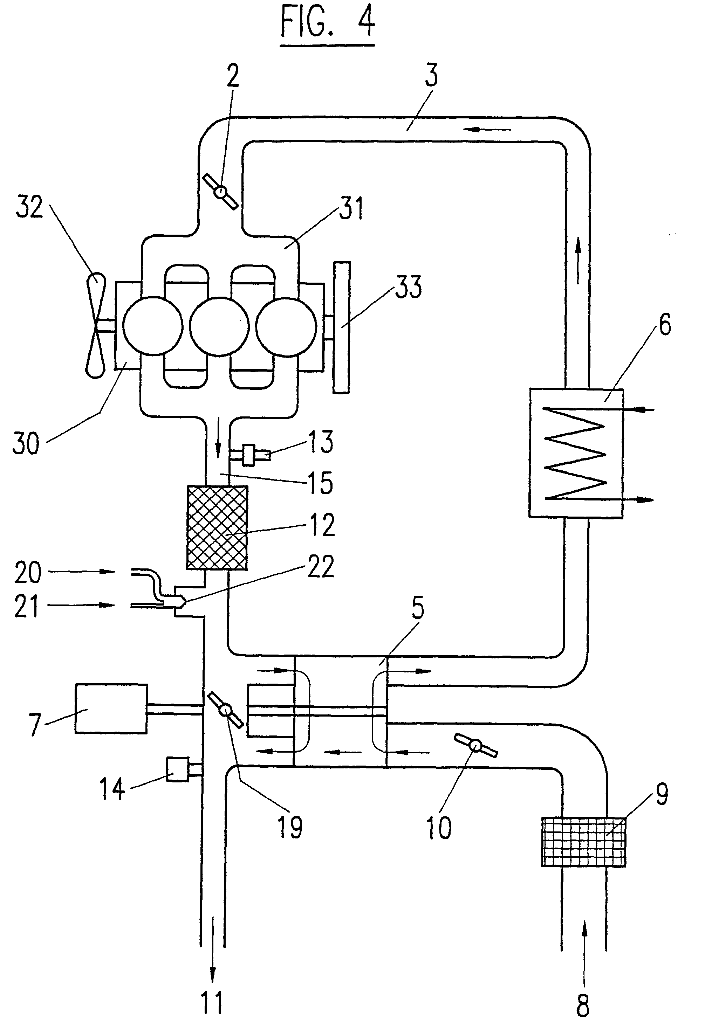

In Figur 3 ist eine Verbrennungsmaschine dargestellt, die ein Diesel-Motor 30 ist, wobei auch hier das Saugrohr 31, der Ventilator 32 und der Abtrieb 33 dargestellt sind. Im Unterschied zu den vorhergehenden Beispielen ist beim Diesel-Motor kein geregelter Dreiwegkatalysator am Auslass 15 angeordnet, sondern ein Oxydationskatalysator 12, wobei der Oxydationskatalysator zwischen dem Diesel-Motor-Auslass 15 und dem Abgaseinlass der Druckwellenmaschine 5 angeordnet ist. Um sowohl die Druckwellenmaschine als auch den Oxydationskatalysator gegebenenfalls zu erwärmen, befindet sich die Heizeinrichtung 22 zwischen dem Oxydationskatalysator 12 und dem Abgaseinlass der Druckwellenmaschine.

Dadurch werden einerseits die Kaltstarteigenschaften der Druckwellenmaschine und des Oxydationskatalysators und andererseits die Abgaseigenschaften des Diesel-Motors verbessert.

## Patentansprüche

1. Otto-Motor in Kombination mit einer Druckwellenmaschine und einem Dreiwegkatalysator, wobei der Dreiwegkatalysator (4; 4A, 4b) im Auslass (15) des Otto-Motors (1), zwischen dem Otto-Motor und dem Abgaseinlass der Druckwellenmaschine (5), angeordnet ist und zwischen dem Dreiwegkatalysator (4; 4A, 4B) und dem Abgaseinlass der Druckwellenmaschine eine Heizeinrichtung (22) angeordnet ist.

2. Otto-Motor in Kombination mit einer Druckwellenmaschine und einem Dreiwegkatalysator nach Anspruch 1, **dadurch gekennzeichnet, dass** der Dreiwegkatalysator (4A, 4B) zweiteilig ist und sich die Heizeinrichtung (22) zwischen den beiden Katalysator-Teilen befindet.

3. Otto-Motor in Kombination mit einer Druckwellenmaschine und einem Dreiwegkatalysator nach Anspruch 1 oder 2, **dadurch gekennzeichnet, dass** dem Dreiwegkatalysator (4) ein Oxydationskatalysator (12) nachgeschaltet ist, der zwischen dem Abgasauslass der Druckwellenmaschine (5) und der Abgasanlage (11) angeordnet ist.

4. Otto-Motor in Kombination mit einer Druckwellenmaschine und einem Dreiwegkatalysator nach einem der Ansprüche 1 bis 3, **dadurch gekennzeichnet, dass** am Frischlufteinlass zur Druckwellenmaschine (5) eine Lader-Drosselklappe (10) angeordnet ist, um die Spülluftmenge der Druckwellenmaschine zu steuern.

5. Otto-Motor in Kombination mit einer Druckwellenmaschine und einem Dreiwegkatalysator nach einem der Ansprüche 1 bis 4, **dadurch gekennzeichnet, dass** am Abgasauslass der Druckwellenmaschine (5) Steuermittel in Form einer Wastegate-Klappe (19) angeordnet sind, um den Ladedruck zu regeln.

6. Otto-Motor in Kombination mit einer Druckwellenmaschine und einem Dreiwegkatalysator nach einem der Ansprüche 1 bis 5, **dadurch gekennzeichnet, dass** die Druckwellenmaschine (5) einen Antrieb (7) aufweist, der zur Drehzahlstabilisierung des Zellenrotors in der Druckwellenmaschine dient und elektrisch oder mechanisch angetrieben ist.

7. Otto-Motor in Kombination mit einer Druckwellenmaschine und einem Dreiwegkatalysator nach einem der Ansprüche 1 bis 6, **dadurch gekennzeichnet, dass** die Heizeinrichtung ein Brenner (22) mit Luft- und Brennstoffzufuhr (20, 21) oder eine elektrische Heizeinrichtung ist.

8. Diesel-Motor in Kombination mit einer Druckwellenmaschine, einer Heizeinrichtung und einem Katalysator, wobei die Heizeinrichtung auf den Abgaseinlass der Druckwellenmaschine wirkt, **dadurch gekennzeichnet, dass** der Katalysator ein Oxydationskatalysator (12) ist und im Auslass (15) des Diesel-Motors (30), zwischen dem Diesel-Motor und dem Abgaseinlass der Druckwellenmaschine (5) und die Heizeinrichtung (22) zwischen dem Oxydationskatalysator (12) und dem Abgaseinlass der Druckwellenmaschine (5) angeordnet ist.

9. Diesel-Motor in Kombination mit einer Druckwellenmaschine und einer Heizeinrichtung nach Anspruch 8, **dadurch gekennzeichnet, dass** am Frischlufteinlass zur Druckwellenmaschine (5) eine Lader-Drosselklappe (10) angeordnet ist, um die Spülluftmenge zu steuern.

10. Diesel-Motor in Kombination mit einer Druckwellenmaschine und einer Heizeinrichtung nach Anspruch 8 oder 9, **dadurch gekennzeichnet, dass** am Abgasauslass der Druckwellenmaschine (5) Steuermittel in Form einer Wastegate-Klappe (19) angeordnet sind, um den Ladedruck zu regeln.

11. Diesel-Motor in Kombination mit einer Druckwellenmaschine und einer Heizeinrichtung nach einem der Ansprüche 8 bis 10, **dadurch gekennzeichnet, dass** die Druckwellenmaschine (5) einen Antrieb (7) aufweist, der zur Drehzahlstabilisierung des Zellenrotors in der Druckwellenmaschine dient und elektrisch oder mechanisch angetrieben ist.

12. Diesel-Motor in Kombination mit einer Druckwellenmaschine und einer Heizeinrichtung nach einem der Ansprüche 8 bis 11, **dadurch gekennzeichnet, dass** die Heizeinrichtung ein Brenner (22) mit Luft- und Brennstoffzufuhr (20, 21) oder eine elektrische Heizeinrichtung ist.

## Claims

1. Spark ignition engine in combination with a pressure wave machine and a three-way catalyst, the three-way catalyst (4; 4A, 4B) being disposed in the outlet (15) of the spark ignition engine (1), between the spark ignition engine and the exhaust gas inlet of the pressure wave machine (5), and a heating device (22) being disposed between the three-way catalyst (4; 4A, 4B) and the exhaust gas inlet of the pressure wave machine.

2. Spark ignition engine in combination with a pressure wave machine and a three-way catalyst according to claim 1, **characterised in that** the three-way catalyst (4A, 4B) is composed of two parts and the heating device (22) is disposed between the two parts of the catalyst.

3. Spark ignition engine in combination with a pressure wave machine and a three-way catalyst according to claim 1 or 2, **characterised in that** the three-way catalyst (4) is followed by an oxidation catalyst (12) that is disposed between the exhaust gas outlet of the pressure wave machine (5) and the exhaust system (11).

4. Spark ignition engine in combination with a pressure wave machine and a three-way catalyst according to any one of claims 1 to 3, **characterised in that** the fresh air inlet of the pressure wave machine (5) is provided with a charger throttle (10) in order to control the amount of scavenging air supplied to the pressure wave machine.

5. Spark ignition engine in combination with a pressure wave machine and a three-way catalyst according to any one of claims 1 to 4, **characterised in that** the exhaust gas outlet of the pressure wave machine (5) is provided with control means in the form of a wastegate flap (19) in order to regulate the charging pressure.

6. Spark ignition engine in combination with a pressure wave machine and a three-way catalyst according to any one of claims 1 to 5, **characterised in that** the pressure wave machine (5) comprises a drive (7) that serves for the stabilisation of the speed of the cell rotor in the pressure wave machine and is electrically or mechanically driven.

7. Spark ignition engine in combination with a pressure wave machine and a three-way catalyst according to any one of claims 1 to 6, **characterised in that** the heating device is a burner (22) comprising an air and a fuel supply (20, 21), or an electric heating device.

8. Diesel engine in combination with a pressure wave machine, a heating device and a catalyst, the heating device acting upon the exhaust gas inlet of the pressure wave machine, **characterised in that** the catalyst is an oxidation catalyst (12) and is disposed in the outlet (15) of the diesel engine (30), between the diesel engine and the exhaust gas inlet of the pressure wave machine (5), and the heating device (22) is disposed between the oxidation catalyst (12) and the exhaust gas inlet of the pressure wave machine (5).

9. Diesel engine in combination with a pressure wave machine and a heating device according to claim 8, **characterised in that** the fresh air inlet of the pressure wave machine (5) is provided with a charger throttle (10) in order to control the amount of scavenging air.

10. Diesel engine in combination with a pressure wave machine and a heating device according to claim 8 or 9, **characterised in that** the exhaust gas outlet of the pressure wave machine (5) is provided with control means in the form of a wastegate flap (19) in order to regulate the charging pressure.

11. Diesel engine in combination with a pressure wave machine and a heating device according to any one of claims 8 to 10, **characterised in that** the pressure wave machine (5) comprises a drive (7) that serves for the stabilisation of the speed of the cell rotor in the pressure wave machine and is electrically or mechanically driven.

12. Diesel engine in combination with a pressure wave machine and a heating device according to any one of claims 8 to 11, **characterised in that** the heating device is a burner (22) comprising an air and a fuel supply (20, 21), or an electric heating device.

## Revendications

1. Moteur à allumage par étincelle en combinaison avec un compresseur à ondes de pression et un catalyseur à trois voies, ledit catalyseur à trois voies (4; 4A, 4B) étant disposé dans l'échappement (15) du moteur à allumage par étincelles (1), entre le moteur à allumage par étincelles et l'admission des gaz d'échappement du compresseur à ondes de pression (5), et un dispositif de chauffage (22) étant disposé entre le catalyseur à trois voies (4; 4A, 4B) et l'admission des gaz d'échappement du compresseur à ondes de pression.

2. Moteur à allumage par étincelle en combinaison avec un compresseur à ondes de pression et un catalyseur à trois voies selon la revendication 1, **caractérisé en ce que** le catalyseur à trois voies (4A, 4B) est divisé en deux parties et le dispositif de chauffage (22) est disposé entre les deux parties du catalyseur.

3. Moteur à allumage par étincelle en combinaison avec un compresseur à ondes de pression et un catalyseur à trois voies selon la revendication 1 ou 2, **caractérisé en ce que** le catalyseur à trois voies (4) est suivi d'un convertisseur catalytique à oxydation (12) disposé entre la sortie des gaz d'échappement du compresseur à ondes de pression (5) et le système d'échappement (11).

4. Moteur à allumage par étincelle en combinaison avec un compresseur à ondes de pression et un catalyseur à trois voies selon l'une quelconque des revendications 1 à 3, **caractérisé en ce qu'**un clapet d'étranglement (10) du compresseur est disposé dans l'admission d'air frais du compresseur à ondes de pression (5) afin de régler la quantité d'air de balayage admise au compresseur à ondes de pression.

5. Moteur à allumage par étincelle en combinaison avec un compresseur à ondes de pression et un catalyseur à trois voies selon l'une quelconque des revendications 1 à 4, **caractérisé en ce que** la sortie des gaz d'échappement du compresseur à ondes de pression (5) est munie de moyens de commande sous forme d'une soupape de décharge (19) afin de régler la pression de charge.

6. Moteur à allumage par étincelle en combinaison avec un compresseur à ondes de pression et un catalyseur à trois voies selon l'une quelconque des revendications 1 à 5, **caractérisé en ce que** le compresseur à ondes de pression (5) comporte un entraînement (7) qui sert à la stabilisation du régime du rotor à cellules dans le compresseur à ondes de pression et est entraîné par voie électrique ou mécanique.

7. Moteur à allumage par étincelle en combinaison avec un compresseur à ondes de pression et un catalyseur à trois voies selon l'une quelconque des revendications 1 à 6, **caractérisé en ce que** ledit dispositif de chauffage est un brûleur (22) comprenant une admission d'air et de combustible (20, 21), ou un dispositif de chauffage électrique.

8. Moteur diesel en combinaison avec un compresseur à ondes de pression, un dispositif de chauffage et un catalyseur, ledit dispositif de chauffage agissant sur l'admission des gaz d'échappement du compresseur à ondes de pression, **caractérisé en ce que** ledit catalyseur est un convertisseur catalytique à oxydation (12) et est disposé dans l'échappement (15) du moteur diesel (30), entre le moteur diesel et l'admission des gaz d'échappement du compresseur à ondes de pression (5), et que le dispositif de chauffage (22) est disposé entre le convertisseur catalytique à oxydation (12) et l'admission des gaz d'échappement du compresseur à ondes de pression (5).

9. Moteur diesel en combinaison avec un compresseur à ondes de pression et un dispositif de chauffage selon la revendication 8, **caractérisé en ce qu'**un clapet d'étranglement (10) du compresseur est disposé dans l'admission d'air frais du compresseur à ondes de pression (5) afin de régler la quantité d'air de balayage.

10. Moteur diesel en combinaison avec un compresseur à ondes de pression et un dispositif de chauffage selon la revendication 8 ou 9, **caractérisé en ce que** la sortie des gaz d'échappement du compresseur à ondes de pression (5) est munie de moyens de commande sous forme d'une soupape de décharge (19) afin de régler la pression de charge.

11. Moteur diesel en combinaison avec un compresseur à ondes de pression et un dispositif de chauffage selon l'une quelconque des revendications 8 à 10, **caractérisé en ce que** le compresseur à ondes de pression (5) comporte un entraînement (7) qui sert à la stabilisation du régime du rotor à cellules dans le compresseur à ondes de pression et est entraîné par voie électrique ou mécanique.

12. Moteur diesel en combinaison avec un compresseur à ondes de pression et un dispositif de chauffage selon l'une quelconque des revendications 8 à 11, **caractérisé en ce que** ledit dispositif de chauffage est un brûleur (22) comprenant une admission d'air et de combustible (20, 21), ou un dispositif de chauffage électrique.
